# EUROPÄISCHE PATENTANMELDUNG

(11) **EP 1 232 882 A2**
(43) Veröffentlichungstag der Anmeldung: **21.08.2002**
(21) Anmeldenummer: 02000848.8
(22) Anmeldetag: 15.01.2002
(51) Int. Cl.: B60G 17/04

(54) **Hydropneumatische Federung für Fahrzeuge mit stark wechselnden Achslasten**

(30) Priorität: 15.02.2001 DE 10107644
(71) Anmelder: Carl Freudenberg KG, 69469 Weinheim (DE)
(72) Erfinder: Brandenburger, Walter, 41470 Neuss (DE)

(57) **Zusammenfassung**

Hydropneumatische Federung für Fahrzeuge mit stark wechselnden Achslasten, insbesondere an Schleppern mit hydraulischen Federzylindern, die über Zuleitungen mit einer Druckmittelförderpumpe verbindbar sind, wobei ein Druckregelventil in die Zuleitung zu den Ringräumen der Federzylinder eingesetzt ist, wobei das Druckregelventil (65) ein proportional geregeltes Ventil ist, das mit einem elektrischen oder elektromagnetischen Stellmotor (67) versehen ist, der von einem den Druck in der Zuleitung (13) zu den Kolbenräumen (3, 4) der Federzylinder (1, 2) messenden elektrischen Drucksensor (68) gesteuert wird.

## Beschreibung

Für den Fahrkomfort von Fahrzeugen mit stark wechselnden Achslasten ist eine Anpassung des Federungsverhaltens der Vorderachse an die sich verändernden Achslasten erwünscht. Abhängig vom Arbeitseinsatz kann die Vorderachse eines solchen Fahrzeugs sehr niedrigen und sehr hohen statischen Belastungen ausgesetzt sein. Bei den hydropneumatischen Federungseinrichtungen werden Niveauregler eingesetzt, die durch entsprechendes Öffnen und Schließen von Wegeventilen einen Niveauausgleich der gefederten Massen zu den ungefederten Massen bewirken. Durch entsprechendes Auf- beziehungsweise Abregeln werden bei den eingesetzten doppeltwirkenden Hydraulikzylindern der Federungseinrichtung deren Kolben auf einem mittleren Niveau gehalten.

### Stand der Technik

Durch DE 41 20 758 A1 ist eine hydropneumatische Federung für Kraftfahrzeuge mit großen Achslastenspreizungen bekannt geworden, bei der doppeltwirkende Hydraulikzylinder eingesetzt werden, deren Zylinderräume mit einem Speicher und der kolbenstangenseitigen Ringräume mit einem weiteren Druckspeicher verbunden sind. Ein Niveauregelventil regelt die Höhenlage und ein druckgesteuertes Ventil ein vorgegebenes Druckverhältnis zwischen Drücken des ersten und des zweiten Speichers in Abhängigkeit von der Belastung der hydropneumatischen Stellglieder. Dabei wird das druckgesteuerte Ventil sowohl vom Druck in der Druckleitung zu den Zylinderräumen als auch vom Druck der Druckleitung zu den Ringräumen betätigt.

Eine andere Möglichkeit der Druckregelung ist in der DE 42 42 448 C1 enthalten mit dem Vorteil, dass dort Load-Sensing-Pumpen eingesetzt werden können. Dabei kommt ein Druckregelventil zum Einsatz, welches das Druckniveau im Ringraumfederkreis konstant hält. Der jeweiligen Schlepperbelastung wird das entsprechende Druckniveau zugeordnet.

Eine besonders gute Lösung hinsichtlich des Fahrkomforts wird bei einer Einrichtung nach der DE 197 19 077 A1 dadurch erreicht, dass als Druckregelventil ein lastangepasstes Zwei-Stufen-Druckregelventil verwendet wird. Hierdurch ist es möglich, auch größere Lastverhältnisse auszuregeln und die Federung den Belastungsfällen anzupassen. Eine Änderung des Ringraumdrucks zwischen dem unteren und dem oberen Grenzwert ist lastabhängig möglich.

Die Einrichtung nach DE 197 19 076 A1 unterscheidet sich von derjenigen aus der DE 197 19 077 A1 durch den Einsatz eines elektrischen Höhenreglers, dessen elektronisch verarbeiteten Steuersignale Magnetventile ansteuern.

Die Erfahrung zeigt, dass bei Federungsanlagen in Schleppern allgemein die Komfortabstimmung mittels eines 2-Stufen-Druckregelventils ausreicht. Wird jedoch eine sensiblere Abstimmung unter Berücksichtigung weiterer Abhängigkeiten gewünscht, so ist ein mehrstufiges Druckregelventil gefordert, welches sich nach dem bekannten Funktionsprinzip nur sehr aufwendig darstellen lässt.

### Darstellung der Erfindung

Der Erfindung liegt die Aufgabe zugrunde eine Steuerung zu schaffen, die es ermöglicht, Komfort und Fahrverhalten des Schleppers optimal an die jeweiligen Einsatzbedingungen anpassen zu können. Das Federungsverhalten soll keine sprunghaften Änderungen aufweisen. Der Fahrer soll bei allen denkbaren Fahrvorgängen eine ausreichend weiche Federung mit möglichst gleichbleibenden Amplituden verspüren.

Die Lösung der gestellten Aufgabe wird bei einer hydropneumatischen Federung für Fahrzeuge mit stark wechselnden Achslasten, insbesondere an Schleppern mit hydraulischen Federzylindern, die über Zuleitungen mit einer Druckmittelförderpumpe verbindbar sind, wobei ein Druckregelventil in die Zuleitung zu den Ringräumen der Federzylinder eingesetzt ist, erfindungsgemäß dadurch erreicht, dass das Druckregelventil ein proportional geregeltes Ventil ist, das von einem Steuerstrom aus einem elektrischen Steuergerät gesteuert wird, das die gemessenen Signale eines Drucksensors, der mit den Kolbenräumen der Federzylinder verbunden ist, elektronisch verarbeitet oder mit weiteren Funktionsdaten oder mit externen Steuersignalen aus der Arbeitshydraulik verknüpft ist.

Eine solche Lösung bietet neben der guten Anpassbarkeit der Federrate den Vorteil, bisher übliche Steuerelemente und Verbindungsleitungen für die Funktion des Druckregelventils nicht mehr zu benötigen. Der ganz besondere Vorteil liegt aber darin, dass die Achsfederrate an die gefederte Achslast kontinuierlich ohne Unterbrechung angepasst wird und auf diese Weise jeder beliebige Kurvenverlauf der Achsfederrate in Abhängigkeit von Achslast und sonstigen Betriebzuständen gewählt werden kann. Durch die vom Stellmotor vorgenommene Verstellung des Druckregelventils wird dessen Regelfeder ständig an den in der Zuleitung zu den Kolbenräumen der Federzylinder herrschenden Druck angepasst, wodurch eine ständige Druckregelung in den Ringräumen der Federzylinder erfolgt.

### Kurzbeschreibung der Zeichnung

Anhand eines in der Zeichnung dargestellten Ausführungsbeispiels wird die Erfindung nachstehend näher erläutert.

Es zeigt:
- Fig. 1: den Verlauf einer Federungskennlinie, in dem die Achsfederrate in Abhängigkeit von der Achslast aufgetragen ist und
- Fig. 2: einen Schaltplan für die hydropneumatische Federung mit einem Druckregelventil mit einem elektromagnetischen Stellmotor.

### Ausführung der Erfindung

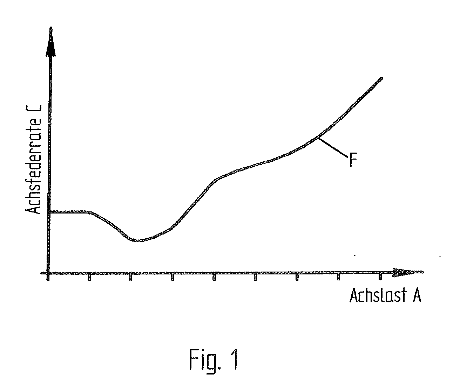

In der Fig. 1 ist der Verlauf einer Federkennungslinie F eingetragen und zwar als Achsfederrate C in Abhängigkeit von der Achslast A an der Vorderachse eines Fahrzeugs wie sie bei Anwendung der Erfindung möglich ist. Die stetige Überwachung des Drucks in den Kolbenräumen der Federzylinder, und die Verarbeitung der gemessenen Signale in einem elektrischen Steuergerät, welches das Druckregelventil stetig regelt, ermöglicht ein Federungsverhalten ohne sprunghafte Änderungen in der Federkennungslinie F. Dadurch ist jeder beliebige Verlauf der Federkennungslinie F möglich.

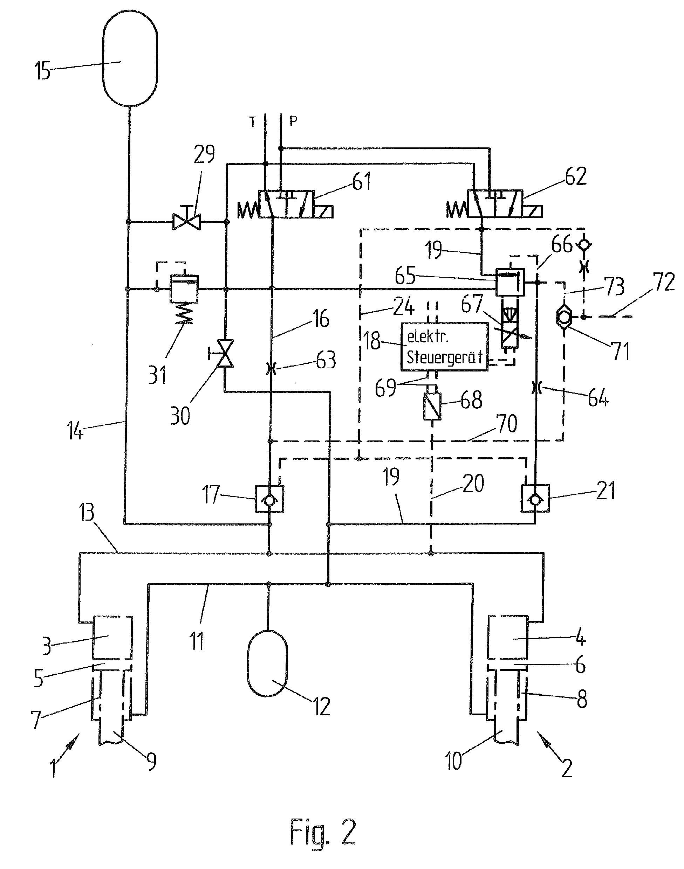

In der Fig. 2 ist der Schaltplan für die Vorderachsfederung eines Schlepperfahrzeugs gezeigt. Die Federzylinder 1 und 2 sind zwischen den nicht näher dargestellten ungefederten und gefederten Massen angeordnet. Sie besitzen die Kolbenräume 3 und 4, die durch die Kolben 5 und 6 von den Ringräumen 7 und 8 getrennt sind. Die Kolbenstangen 9 und 10 sind abgedichtet nach außen geführt. Die beiden Ringräume 7 und 8 sind durch die Verbindungsleitung 11 miteinander verbunden und an den Hydrospeicher 12 angeschlossen. Die Kolbenräume 3 und 4 sind über die Verbindungsleitung 13 miteinander verbunden, die über die Leitung 14 mit dem Hydrospeicher 15 kommuniziert. An die Leitung 14 schließt die vom 3/2-Wegeventil 61 kommende Zuleitung 16 an. In die Zuleitung 16 ist die Drossel 63 und das entsperrbare Rückschlagventil 17 eingefügt. Zwischen der Drossel 63 und dem Rückschlagventil 17 schließt die Steuerleitung 70 an die Zuleitung 16 an.

In die Verbindungsleitung 11 mündet die vom 3/2-Wegeventil 62 kommende Zuleitung 19, die ebenfalls mit einem entsperrbaren Rückschlagventil 21 und der Drossel 64 ausgestattet ist. Zwischen dem Wegeventil 62 und der Drossel 64 ist das proportional geregelte Druckregelventil 65 eingesetzt. Die Steuerleitung 66 des Druckregelventils 65 ist an dem geregelten Druckbereich der Zuleitung 19 angeschlossen. Das Druckregelventil 65 hat den elektrischen Stellmotor 67, der die Steuersignale vom elektrischen Steuergerät 18 erhält. Der Drucksensor 68 greift den Druck in den Zylinderräumen 3 und 4 an der Verbindungsleitung 13 ab. Über die elektrischen Leitungen 69 werden die Signale des Sensors 68 an das Steuergerät 18 übertragen und dort elektronisch verarbeitet und dann weiter an den Stellmotor 67 geleitet. Die Steuerleitung 70 führt zu dem Wechselventil 71 und von dort in die Steuerleitung 72 zur Load-Sensing-Pumpe. Die zweite Steuerleitung 73 des Wechselventils 71 ist an die Zuleitung 19 nach dem Druckregelventil 65 angeschlossen. Die Steuerleitung 24 für die Entsperrung der Rückschlagventile 17 und 21 ist an der Zuleitung 19 zwischen dem Niveauregelventil 62 und dem Druckregelventil 65 angeschlossen.

Das Steuergerät 18 hat die Aufgabe, die beim Federn des Fahrzeugs wechselnden elektrischen Signale des Drucksensors zu glätten, damit dem Druckregelventil 65 ein beruhigtes Steuersignal übermittelt werden kann. In vorteilhafter Weise ist das Steuergerät 18 so konzipiert, dass es zusätzlich Steuersignale in Abhängigkeit von Arbeitsfunktionen verknüpfen kann, was mit den Steuerleitungen oberhalb des Steuergeräts angedeutet wurde.

Der Drucksensor 68 ist über die Steuerleitung 20 unmittelbar an die Verbindungsleitung 13 der Kolbenräume 3 und 4 angeschlossen, damit die Druckwerte unverfälscht abgreifbar sind.

Die Schaltung ist außerdem noch mit dem Überdruckventil 31 und den Serviceventilen 29 und 30 ausgestattet.

## Patentansprüche

1. Hydropneumatische Federung für Fahrzeuge mit stark wechselnden Achslasten, insbesondere an Schleppern mit hydraulischen Federzylindern, die über Zuleitungen mit einer Druckmittelförderpumpe verbindbar sind, wobei ein Druckregelventil in die Zuleitung zu den Ringräumen der Federzylinder eingesetzt ist, **dadurch gekennzeichnet, dass** das Druckregelventil (65) ein proportional geregeltes Ventil ist, das von einem Steuerstrom aus einem elektrischen Steuergerät (18) gesteuert wird, das die gemessenen Signale eines Drucksensors (68), der mit den Kolbenräumen (3, 4) der Federzylinder (1, 2) verbunden ist, elektronisch verarbeitet.

2. Federung nach Anspruch 1, **dadurch gekennzeichnet, dass** das Steuergerät (18) die Signale des Drucksensors (68) mit weiteren Funktionsdaten verknüpft.

3. Federung nach Anspruch 1 oder 2, **dadurch gekennzeichnet, dass** der Drucksensor (68) hydraulisch über eine Leitung (20) unmittelbar an die die Kolbenräume (3, 4) verbindende Verbindungsleitung (13) angeschlossen ist.
